# EUROPEAN PATENT APPLICATION

(11) **EP 4 572 473 A1**
(43) Date of publication of application: **18.06.2025**
(21) Application number: 23862354.0
(22) Date of filing: 04.09.2023
(51) Int. Cl.: H04W 72/04

(54) **COMMUNICATION METHOD AND COMMUNICATION APPARATUS**

(30) Priority: 08.09.2022 CN 202211097051
(71) Applicant: Huawei Technologies Co., Ltd., Shenzhen, Guangdong 518129 (CN)
(72) Inventor: WANG, Zhonglong, Shenzhen, Guangdong 518129 (CN); XIE, Xinqian, Shenzhen, Guangdong 518129 (CN); SHAO, Jiafeng, Shenzhen, Guangdong 518129 (CN); YE, Wei, Shenzhen, Guangdong 518129 (CN); LI, Hantao, Shenzhen, Guangdong 518129 (CN)
(74) Representative: Körber, Martin Hans
(86) International application number: PCT/CN2023/116851
(87) International publication number: WO 2024/051660

(57) **Abstract**

This application provides a communication method and a communication apparatus. The method includes: A network device sends a first sensing signal and a first communication signal in a first frequency band, sends a second sensing signal in a second frequency band, and sends a third communication signal in a third frequency band, where the first frequency band includes only a downlink resource, the second frequency band includes only a downlink resource, and the third frequency band includes an uplink resource and a downlink resource. In this frequency band combination manner, a communication device can perform target sensing during communication, to integrate the communication and the target sensing.

## Description

This application claims priority to Chinese Patent Application No. 202211097051.1, filed with the China National Intellectual Property Administration on September 8, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Integrated sensing and communication is a key technology in a next generation wireless communication system, aims to integrate two functions: wireless communication and sensing into a same system, and implements sensing functions such as positioning, detection, imaging, and identification of a target by using various propagation characteristics of a radio signal, to obtain surrounding physical environment information, explore a communication capability, and enhance user experience.

Currently, a wireless communication system is mainly designed to meet a service requirement of a communication service. How to integrate communication and sensing in the wireless communication system becomes an urgent problem to be resolved.

### SUMMARY

Embodiments of this application provide a communication method and a communication apparatus. In this frequency band combination manner, a communication device can perform target sensing during communication, to integrate the communication and the target sensing.

According to a first aspect, a communication method is provided. The method may be performed by a network device or a module (for example, a chip) configured in (or used in) a network device.

The method includes: sending a first sensing signal and a first communication signal in a first frequency band; sending a second sensing signal in a second frequency band; and sending a third communication signal in a third frequency band, where the first frequency band includes only a downlink resource, the second frequency band includes only a downlink resource, and the third frequency band includes an uplink resource and a downlink resource.

According to the foregoing solution, the network device can periodically send, in this frequency band combination manner, a sensing signal in the first frequency band that includes only the downlink resource, to perform target sensing. In comparison with sending a sensing signal in the third frequency band in which the network device communicates with a terminal device, a case in which sensing performed by the network device is interrupted because the network device cannot send a sensing signal on an uplink resource can be avoided, and continuity and reliability of the sensing performed by the network device can be improved. In addition, a downlink communication signal may be further sent in the first frequency band, so that a downlink communication capacity can be increased, and communication and target sensing are integrated. In addition, the network device may further send the second sensing signal in the second frequency band that includes only the downlink resource, to improve target sensing precision.

With reference to the first aspect, in some implementations of the first aspect, frequency of the second frequency band is higher than frequency of the first frequency band, and frequency of the third frequency band is lower than the frequency of the first frequency band.

With reference to the first aspect, in some implementations of the first aspect, the first frequency band is in a frequency range FR 2, and the third frequency band is in a frequency range FR 1.

With reference to the first aspect, in some implementations of the first aspect, the method further includes: receiving a first echo signal in the first frequency band, where the first echo signal is an echo signal of the first sensing signal.

According to the foregoing solution, the network device receives an echo signal of the first sensing signal in the first frequency band, and the network device may obtain sensing information of a target based on the echo signal. For example, the sensing information includes location information and/or speed information. This implements sensing of the target.

With reference to the first aspect, in some implementations of the first aspect, the method further includes: determining L synchronization signal blocks based on the first echo signal, where the L synchronization signal blocks are L of N synchronization signal blocks, L is less than N, N and L are positive integers, and the N synchronization signal blocks are, in frequency domain, on a carrier on which the first frequency band is located, and are in a first time period in time domain; and sending the L synchronization signal blocks.

Optionally, that the N synchronization signal blocks are, in frequency domain, on the carrier on which the first frequency band is located includes:
The N synchronization signal blocks are in the first frequency band in frequency domain, or are in a frequency band other than the first frequency band on the carrier on which the first frequency band is located. According to the foregoing solution, the network device may determine, based on the first echo signal, a location at which a terminal device may exist, and send a synchronization signal block by using a beam that can cover the location at which the terminal device may exist. In this solution, resource waste and power consumption of the network device can be reduced.

With reference to the first aspect, in some implementations of the first aspect, the method further includes: sending first configuration information in the third frequency band, where the first configuration information is used to configure the first frequency band, the first configuration information includes first indication information, and the first indication information indicates the L synchronization signal blocks.

According to the foregoing solution, the network device may configure the first frequency band for the terminal device in the third frequency band by using the first configuration information. For example, the third frequency band is a carrier of a PCell, and the first frequency band is a carrier of an SCell. The first configuration information includes the first indication information, and the terminal device may determine, based on the first indication information, the L synchronization signal blocks actually sent by the network device in the first frequency band. This can reduce power consumption and detection complexity caused by blind detection of a synchronization signal block by the terminal device. In addition, the network device may send a downlink signal to the terminal device in the first frequency band and the third frequency band, so that a downlink transmission rate of the terminal device can be increased.

With reference to the first aspect, in some implementations of the first aspect, the method further includes: sending second indication information in a second time period in the first frequency band, where the second indication information indicates the L synchronization signal blocks, and the second time period is before the first time period.

According to the foregoing solution, the network device may notify, by using the second indication information in the second time period before the first time period, the terminal device of a synchronization signal block actually sent by the network device in the first time period. The terminal device may detect, based on the second indication information, only the L synchronization signal blocks actually sent by the network device in the first frequency band, so that a quantity of synchronization signal blocks detected by the terminal device and detection complexity can be reduced, thereby reducing power consumption of the terminal device.

With reference to the first aspect, in some implementations of the first aspect, duration of the first time period and duration of the second time period are duration of a synchronization signal block periodicity, or duration of the first time period is equal to duration of the second time period, and a start moment of the first time period is an end moment of the second time period.

According to the foregoing solution, the network device periodically sends a synchronization signal block, and the network device may send the second indication information in one synchronization signal block periodicity, to notify the terminal device of a synchronization signal block actually sent by the network device in a next synchronization signal block periodicity. In this way, the quantity of synchronization signal blocks detected by the terminal device and the detection complexity are reduced, thereby reducing the power consumption of the terminal device.

With reference to the first aspect, in some implementations of the first aspect, the method further includes: determining a plurality of second beams based on the first echo signal, where a main lobe width of the second beam is less than a main lobe width of a first beam, and the first beam is a beam for sending the first sensing signal; and the sending a second sensing signal in a second frequency band includes: sending the second sensing signal in the second frequency band through the plurality of second beams.

Optionally, the first frequency band supports the network device in sending the first sensing signal by using a maximum of S beams. A plurality of first beams used by the network device to send the first sensing signal are selected from the S beams. The second frequency band supports the network device in sending the second sensing signal by using a maximum of T beams. The plurality of second beams used by the network device to send the second sensing signal are selected from the T beams, where T is greater than S.

For example, at least T second beams in different directions can cover coverage ranges of the S first beams in different directions, where S and T are positive integers, and T is greater than S.

According to the foregoing solution, the network device may send the second sensing signal in the second frequency band by using a beam with a granularity narrower than that of the first beam for sending the first sensing signal in the first frequency band, so that sensing precision can be improved.

With reference to the first aspect, in some implementations of the first aspect, the first frequency band, the second frequency band, and the third frequency band are respectively located on three carriers; or the first frequency band, the second frequency band, and the third frequency band are respectively three bandwidth parts BWPs on one or more carriers.

With reference to the first aspect, in some implementations of the first aspect, the third frequency band is a carrier of a primary cell PCell of the terminal device, and the first frequency band is a carrier of a secondary cell SCell of the terminal device.

According to a second aspect, a communication method is provided. The method may be performed by a terminal device or a module (for example, a chip) configured in (or used in) a terminal device.

The method includes: receiving first configuration information in a third frequency band, where the first configuration information is used to configure a first frequency band, the first configuration information includes first indication information, and the first indication information indicates L synchronization signal blocks; and detecting the L synchronization signal blocks in the first frequency band, where the L synchronization signal blocks are L of N synchronization signal blocks, L is less than N, N and L are positive integers, and the N synchronization signal blocks are, in frequency domain, on a carrier on which the first frequency band is located, and are in a first time period in time domain.

Optionally, that the N synchronization signal blocks are, in frequency domain, on the carrier on which the first frequency band is located includes:
The N synchronization signal blocks are in the first frequency band in frequency domain, or are in a frequency band other than the first frequency band on the carrier on which the first frequency band is located. With reference to the second aspect, in some implementations of the second aspect, data transmission is performed with a network device in the first frequency band.

Optionally, the first frequency band includes only a downlink resource, and that data transmission is performed with a network device in the first frequency band includes: receiving downlink data from the network device in the first frequency band.

With reference to the second aspect, in some implementations of the second aspect, the L synchronization signal blocks are determined by the network device based on a first echo signal, and the first echo signal is an echo signal of a first sensing signal sent by the network device in the first frequency band.

According to a third aspect, a communication method is provided. The method may be performed by a network device or a module (for example, a chip) configured in (or used in) a network device.

The method includes: sending a first sensing signal and a first communication signal in a first frequency band; and sending a second sensing signal in a second frequency band, where the first frequency band includes an uplink resource and a downlink resource, and the second frequency band includes only a downlink resource.

According to the foregoing solution, the network device can perform both communication and target sensing in a TDD frequency band (namely, the first frequency band) in a frequency band combination manner of the first frequency band and the second frequency band. Further, the network device may send a beam with a narrower granularity in a pure sensing frequency band (namely, the second frequency band). This improves sensing precision, can implement continuity and reliability of sensing performed by the network device, and reduces complexity of an algorithm used by the network device for sensing. In this way, the communication and the target sensing are integrated.

With reference to the third aspect, in some implementations of the third aspect, frequency of the second frequency band is higher than frequency of the first frequency band.

With reference to the third aspect, in some implementations of the third aspect, the first frequency band is in a frequency range FR 2.

With reference to the third aspect, in some implementations of the third aspect, the method further includes: receiving a first echo signal in the first frequency band, where the first echo signal is an echo signal of the first sensing signal.

With reference to the third aspect, in some implementations of the third aspect, the method further includes: determining L synchronization signal blocks based on the first echo signal, where the L synchronization signal blocks are L of N synchronization signal blocks, L is less than N, N and L are positive integers, and the N synchronization signal blocks are in the first frequency band in frequency domain and are in a first time period in time domain; and sending the L synchronization signal blocks.

With reference to the third aspect, in some implementations of the third aspect, the method further includes: sending second indication information in a second time period in the first frequency band, where the second indication information indicates the L synchronization signal blocks, and the second time period is before the first time period.

With reference to the third aspect, in some implementations of the third aspect, duration of the first time period and duration of the second time period are duration of a synchronization signal block periodicity, or duration of the first time period is equal to duration of the second time period, and a start moment of the first time period is an end moment of the second time period.

With reference to the third aspect, in some implementations of the third aspect, the method further includes: determining a plurality of second beams based on the first echo signal, where a main lobe width of the second beam is less than a main lobe width of a first beam, and the first beam is a beam for sending the first sensing signal; and the sending a second sensing signal in a second frequency band includes: sending the second sensing signal in the second frequency band through the plurality of second beams.

Optionally, the first frequency band supports the network device in sending the first sensing signal by using a maximum of S beams. A plurality of first beams used by the network device to send the first sensing signal are selected from the S beams. The second frequency band supports the network device in sending the second sensing signal by using a maximum of T beams. The plurality of second beams used by the network device to send the second sensing signal are selected from the T beams, where T is greater than S.

For example, at least T second beams in different directions can cover coverage ranges of the S first beams in different directions, where S and T are positive integers, and T is greater than S.

With reference to the third aspect, in some implementations of the third aspect, the first frequency band and the second frequency band are respectively located on two carriers; or the first frequency band and the second frequency band are respectively two bandwidth parts BWPs on one or more carriers.

According to a fourth aspect, a communication method is provided. The method may be performed by a network device or a module (for example, a chip) configured in (or used in) a network device.

The method includes: sending a first sensing signal and a first communication signal in a first frequency band; and sending a third communication signal in a third frequency band, where the first frequency band includes only a downlink resource, and the third frequency band includes an uplink resource and a downlink resource.

According to the foregoing solution, the network device can send a sensing signal in the first frequency band that includes only the downlink resource in a frequency band combination manner of the first frequency band and the third frequency band. In comparison with sending a sensing signal in the third frequency band in which the network device communicates with a terminal device, a case in which sensing performed by the network device is interrupted because the network device cannot send a sensing signal on an uplink resource can be avoided, continuity and reliability of the sensing performed by the network device can be improved, and complexity of an algorithm used by the network device for sensing can be reduced. The network device may further send a downlink communication signal in the first frequency band for sending a sensing signal, so that a downlink communication capacity can be improved. In this way, communication and sensing are integrated.

With reference to the fourth aspect, in some implementations of the fourth aspect, frequency of the first frequency band is higher than frequency of the third frequency band.

With reference to the fourth aspect, in some implementations of the fourth aspect, the first frequency band is in a frequency range FR 2, and the third frequency band is in a frequency range FR 1.

With reference to the fourth aspect, in some implementations of the fourth aspect, the method further includes: receiving a first echo signal in the first frequency band, where the first echo signal is an echo signal of the first sensing signal.

With reference to the fourth aspect, in some implementations of the fourth aspect, the method further includes: determining L synchronization signal blocks based on the first echo signal, where the L synchronization signal blocks are L of N synchronization signal blocks, L is less than N, N and L are positive integers, and the N synchronization signal blocks are in the first frequency band in frequency domain and are in a first time period in time domain; and sending the L synchronization signal blocks.

With reference to the fourth aspect, in some implementations of the fourth aspect, the method further includes: sending first configuration information in the third frequency band, where the first configuration information is used to configure the first frequency band, the first configuration information includes first indication information, and the first indication information indicates the L synchronization signal blocks.

With reference to the fourth aspect, in some implementations of the fourth aspect, the method further includes: sending second indication information in a second time period in the first frequency band, where the second indication information indicates the L synchronization signal blocks, and the second time period is before the first time period.

With reference to the fourth aspect, in some implementations of the fourth aspect, duration of the first time period and duration of the second time period are duration of a synchronization signal block periodicity, or duration of the first time period is equal to duration of the second time period, and a start moment of the first time period is an end moment of the second time period.

With reference to the fourth aspect, in some implementations of the fourth aspect, the first frequency band and the third frequency band are respectively located on two carriers; or the first frequency band and the third frequency band are respectively two bandwidth parts BWPs on one or more carriers.

With reference to the fourth aspect, in some implementations of the fourth aspect, the third frequency band is a carrier of a primary cell PCell of the terminal device, and the first frequency band is a carrier of a secondary cell SCell of the terminal device.

According to a fifth aspect, a communication apparatus is provided. In a design, the apparatus may include modules for performing the method/operations/steps/actions described in the first aspect. The modules may be hardware circuits, may be software, or may be implemented by using a combination of a hardware circuit and software. In a design, the apparatus includes: a transceiver unit, configured to send a first sensing signal and a first communication signal in a first frequency band. The transceiver unit is further configured to send a second sensing signal in a second frequency band. The transceiver unit is further configured to send a third communication signal in a third frequency band, where the first frequency band includes only a downlink resource, the second frequency band includes only a downlink resource, and the third frequency band includes an uplink resource and a downlink resource. Optionally, the apparatus further includes a processing unit, configured to control the transceiver unit to send or receive a signal.

According to a sixth aspect, a communication apparatus is provided. In a design, the apparatus may include modules for performing the method/operations/steps/actions described in the second aspect. The modules may be hardware circuits, may be software, or may be implemented by using a combination of a hardware circuit and software. In a design, the apparatus includes: a transceiver unit, configured to receive first configuration information in a third frequency band, where the first configuration information is used to configure a first frequency band, the first configuration information includes first indication information, and the first indication information indicates L synchronization signal blocks. The transceiver unit is further configured to detect the L synchronization signal blocks in the first frequency band, where the L synchronization signal blocks are L of N synchronization signal blocks, L is less than N, N and L are positive integers, and the N synchronization signal blocks are, in frequency domain, on a carrier on which the first frequency band is located, and are in a first time period in time domain. Optionally, the apparatus further includes a processing unit, configured to control the transceiver unit to send or receive a signal.

Optionally, that the N synchronization signal blocks are, in frequency domain, on the carrier on which the first frequency band is located includes:
The N synchronization signal blocks are in the first frequency band in frequency domain, or are in a frequency band other than the first frequency band on the carrier on which the first frequency band is located.

According to a seventh aspect, a communication apparatus is provided. In a design, the apparatus may include modules for performing the method/operations/steps/actions described in the first aspect. The modules may be hardware circuits, may be software, or may be implemented by using a combination of a hardware circuit and software. In a design, the apparatus includes: a transceiver unit, configured to send a first sensing signal and a first communication signal in a first frequency band. The transceiver unit is further configured to send a second sensing signal in a second frequency band, where the first frequency band includes an uplink resource and a downlink resource, and the second frequency band includes only a downlink resource. Optionally, the apparatus further includes a processing unit, configured to control the transceiver unit to send or receive a signal.

According to an eighth aspect, a communication apparatus is provided. In a design, the apparatus may include modules for performing the method/operations/steps/actions described in the first aspect. The modules may be hardware circuits, may be software, or may be implemented by using a combination of a hardware circuit and software. In a design, the apparatus includes: a transceiver unit, configured to send a first sensing signal and a first communication signal in a first frequency band. The transceiver unit is further configured to send a third communication signal in a third frequency band, where the first frequency band includes only a downlink resource, and the third frequency band includes an uplink resource and a downlink resource. Optionally, the apparatus further includes a processing unit, configured to control the transceiver unit to send or receive a signal.

According to a ninth aspect, a communication apparatus is provided, including a processor. The processor may implement the method according to any one of the first aspect, the third aspect, or the fourth aspect, and the possible implementations of the first aspect, the third aspect, or the fourth aspect. Optionally, the communication apparatus further includes a memory. The processor is coupled to the memory, and may be configured to execute instructions in the memory, to implement the method according to any one of the first aspect, the third aspect, or the fourth aspect, and the possible implementations of the first aspect, the third aspect, or the fourth aspect. Optionally, the communication apparatus further includes a communication interface, and the processor is coupled to the communication interface. In embodiments of this application, the communication interface may be a transceiver, a pin, a circuit, a bus, a module, or a communication interface of another type. This is not limited.

In an implementation, the communication apparatus is a network device. When the communication apparatus is the network device, the communication interface may be a transceiver or an input/output interface.

In another implementation, the communication apparatus is a chip configured in a network device. When the communication apparatus is the chip configured in the network device, the communication interface may be an input/output interface.

Optionally, the transceiver may be a transceiver circuit. Optionally, the input/output interface may be an input/output circuit.

According to a tenth aspect, a communication apparatus is provided, including a processor. The processor may implement the method according to any one of the second aspect and the possible implementations of the second aspect. Optionally, the communication apparatus further includes a memory. The processor is coupled to the memory, and may be configured to execute instructions in the memory, to implement the method according to any one of the second aspect and the possible implementations of the second aspect. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip configured in the terminal device. When the communication apparatus is the chip configured in the terminal device, the communication interface may be an input/output interface.

Optionally, the transceiver may be a transceiver circuit. Optionally, the input/output interface may be an input/output circuit.

According to an eleventh aspect, a processor is provided, including an input circuit, an output circuit, and a processing circuit. The processing circuit is configured to: receive a signal through the input circuit, and transmit a signal through the output circuit, to enable the processor to perform the method according to any one of the first aspect to the fourth aspect and the possible implementations of the first aspect to the fourth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a twelfth aspect, a computer program product is provided. The computer program product includes a computer program (which may also be referred to as code or instructions). When the computer program is run, a computer is enabled to perform the method according to any one of the first aspect to the fourth aspect and the possible implementations of the first aspect to the fourth aspect.

According to a thirteenth aspect, a computer-readable storage medium is provided. The computer-readable storage medium stores a computer program (which may also be referred to as code or instructions). When the computer program is run on a computer, the computer is enabled to perform the method according to any one of the first aspect to the fourth aspect and the possible implementations of the first aspect to the fourth aspect.

According to a fourteenth aspect, a communication system is provided, including the foregoing at least one terminal device and at least one network device.

### BRIEF DESCRIPTION OF DRAWINGS

FIG. 1 is a diagram of a communication system according to an embodiment of this application;
FIG. 2 is a schematic flowchart of a communication method according to an embodiment of this application;
FIG. 3 is a diagram of a frequency band combination manner according to an embodiment of this application;
FIG. 4 is a diagram of an SSB burst set according to an embodiment of this application;
FIG. 5 is a diagram of a relationship between a first beam and a second beam according to an embodiment of this application;
FIG. 6 is another schematic flowchart of a communication method according to an embodiment of this application;
FIG. 7 is another diagram of a frequency band combination manner according to an embodiment of this application;
FIG. 8 is another schematic flowchart of a communication method according to an embodiment of this application;
FIG. 9 is another diagram of a frequency band combination manner according to an embodiment of this application;
FIG. 10 is another schematic flowchart of a communication method according to an embodiment of this application;
FIG. 11 is a diagram of a communication scenario according to an embodiment of this application;
FIG. 12 is a block diagram of a communication apparatus according to an embodiment of this application; and
FIG. 13 is a diagram of a structure of a communication apparatus according to an embodiment of this application.

### DESCRIPTION OF EMBODIMENTS

The following describes technical solutions of this application with reference to accompanying drawings.

To make the objectives, technical solutions, and advantages of embodiments of this application clearer, the following clearly and completely describes the technical solutions in embodiments of this application with reference to the accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

In this application, the terms "first", "second", and the like are intended to distinguish between similar objects but do not necessarily indicate a specific order or sequence. It should be understood that the data termed in such a way are interchangeable in proper circumstances so that embodiments of this application described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in this application, "at least one" means one or more, and "a plurality of" means two or more. "At least one of items (pieces)" or a similar expression thereof refers to one item (piece) or a plurality of items (pieces), namely, any combination of these items, including any combination of singular items (pieces) or plural items (pieces). For example, at least one item (piece) of a, b, or c indicates a, b, c, a and b, a and c, b and c, or a and b and c.

It should be further understood that a term "and/or" in this specification describes only an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) system like a 5G new radio (new radio, NR) system, a vehicle-to-everything (vehicle-to-everything, V2X) system, and a future communication system like a 6th generation mobile communication system. This is not limited in this application.

It should be understood that the positioning method provided in this application may be applied to various scenarios, for example, may be applied to one or more of the following communication scenarios: enhanced mobile broadband (enhanced mobile broadband, eMBB), ultra-reliable and low-latency (ultra-reliable and low-latency communication, URLLC), massive machine-type communications (massive machine-type communications, mMTC), an internet of things (Internet of Things, IoT), device-to-device (device-to-device, D2D), vehicle-to-vehicle (vehicle-to-vehicle, V2V), and the like. This is not limited in this application.

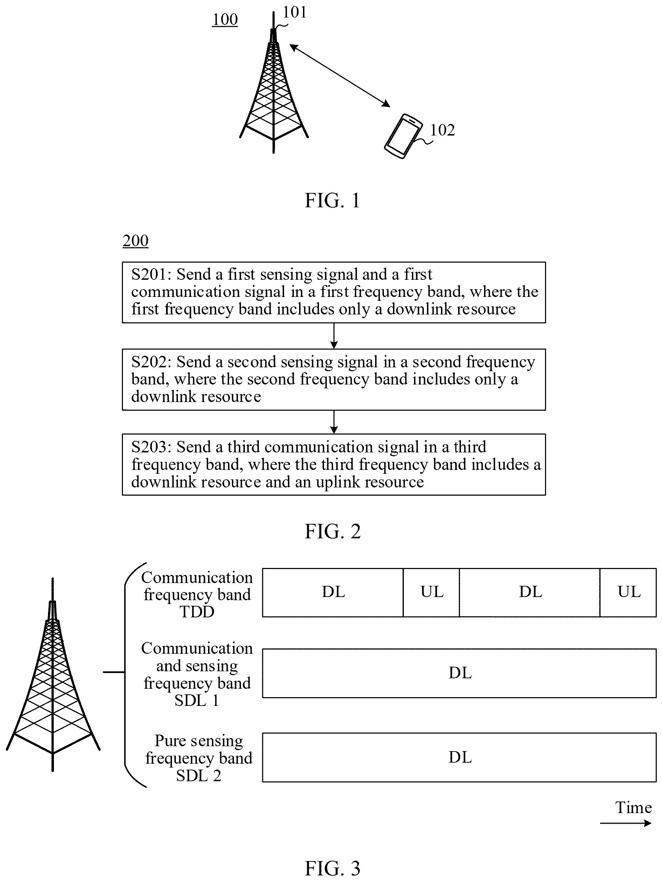

FIG. 1 is a diagram of a communication system 100 to which embodiments of this application are applicable. In an example, the communication system 100 includes at least one network device, for example, a network device 101 shown in FIG. 1. The communication system 100 may further include at least one terminal device, for example, a terminal device 102 shown in FIG. 1. The network device 101 may integrate communication and sensing by using the communication method provided in embodiments of this application. For example, the network device 101 may send a signal in a plurality of frequency bands. The plurality of frequency bands may include a TDD frequency band for communicating with the terminal device, and the plurality of frequency bands may further include a frequency band for sending a sensing signal.

It should be understood that FIG. 1 is merely a diagram of an architecture of a communication system of the communication method provided in embodiments of this application. However, this application is not limited thereto. The communication method provided in embodiments of this application may also be applicable to an architecture of another communication system.

The terminal device in embodiments of this application may also be referred to as UE, an access terminal, a subscriber unit, a subscriber station, a mobile station, a remote station, a remote terminal, a mobile device, a user terminal, a terminal, a wireless communication device, a user agent, a user apparatus, or the like. The terminal device in embodiments of this application may be a mobile phone, a tablet computer, a computer with a wireless transceiver function, a virtual reality (virtual reality, VR) terminal device, an augmented reality (augmented reality, AR) terminal device, a wireless terminal in industrial control, a wireless terminal in unmanned driving, a wireless terminal in telemedicine, a wireless terminal in a smart grid, a wireless terminal in transportation security, a wireless terminal in a smart city, a wireless terminal in a smart home, a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, a vehicle-mounted device, a wearable device, a terminal device in a 5G network, a terminal device in a future evolved public land mobile network (public land mobile network, PLMN), or the like. It should be understood that, a specific form of the terminal device is not limited in this application.

The network device in embodiments of this application may be a device that has a wireless transceiver function in an access network. The device includes but is not limited to: a base station, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), an access point (access point, AP) in a wireless fidelity (wireless fidelity, Wi-Fi) system, a wireless relay node, a wireless backhaul node, a transmission point (transmission point, TP), or a transmission reception point (transmission reception point, TRP). Alternatively, the device may be a network node that forms a gNB or a transmission point, for example, a distributed unit (distributed unit, DU). It should be understood that, a specific form of an access network device is not limited in this application.

The following describes conventional technologies and terms in embodiments of this application.

### 1. Frequency range (frequency range, FR)

A plurality of FRs are defined in a mobile communication system. In some scenarios, signal processing manners for different FRs may be different. An FR 1 is a frequency range from 410 MHz to 7125 MHz. An FR 2 includes two frequency sub-ranges: an FR 2-1 and an FR 2-2. The FR 2-1 is a frequency range from 24250 MHz to 52600 MHz, and the FR 2-2 is a frequency range from 52600 MHz to 71000 MHz.

### 2. Carrier aggregation (carrier aggregation, CA)

In a carrier aggregation (CA) scenario, a terminal device may establish communication connections to a plurality of cells. The plurality of cells serve as serving cells of the terminal device to provide a communication service for the terminal device. Carrier frequency bands of the plurality of cells do not overlap. In a CA communication mode, communication bandwidth between a network device and the terminal device can be increased, and a data transmission rate can be increased. A cell initially accessed by the terminal device is referred to as a primary cell (primary cell, PCell), and is used by the terminal device to establish a radio resource control (radio resource control, RRC) connection to a network. The network device may configure a secondary cell (secondary cell, SCell) for the terminal device based on a transmission requirement of the terminal device, to provide more uplink transmission resources and/or downlink transmission resources for the terminal device. The secondary cell may be configured by using RRC signaling of the primary cell.

For a network device that communicates with the terminal device in a TDD manner, if it is designed that the network device sends a sensing signal on a TDD carrier used for communication with the terminal device, a case in which sensing is interrupted because the network device cannot send a sensing signal on an uplink resource occurs. Therefore, this application proposes that the network device should send a sensing signal in a frequency band that includes only a downlink resource and that is other than the TDD carrier, so that continuity and reliability of sensing performed by the network device can be improved.

FIG. 2 is a schematic flowchart of a communication method 200 according to an embodiment of this application. The communication method 200 shown in FIG. 2 may be performed by a network device or an apparatus (for example, a chip or a chip module) configured in a network device. The following uses an example in which the network device performs the method 200 for description.

The method shown in FIG. 2 provides a frequency band combination manner of the network device. An operating frequency band of the network device includes a first frequency band, a second frequency band, and a third frequency band. The third frequency band may be referred to as a communication frequency band, and is a frequency band used by the network device to communicate with a terminal device. The first frequency band may be referred to as a communication and sensing frequency band, and may be used by the network device to send a downlink communication signal to the terminal device and used by the network device to send a sensing signal. The first frequency band may also be referred to as a supplementary downlink (supplementary downlink, SDL) frequency band, for example, denoted as an SDL 1. The second frequency band may be referred to as a pure sensing frequency band, and is used by the network device to send a sensing signal. The second frequency band may also be referred to as an SDL frequency band, for example, denoted as an SDL 2. The frequency band combination manner of the network device may be shown in FIG. 3.

In an implementation, the first frequency band, the second frequency band, and the third frequency band are respectively located on three carriers (carriers).

For example, the first frequency band is an SDL carrier, the second frequency band is an SDL carrier, and the third frequency band is a TDD carrier. Alternatively, the first frequency band is a downlink frequency domain resource of an FDD carrier, the second frequency band is an SDL carrier, and the third frequency band is a TDD carrier.

In another implementation, the first frequency band, the second frequency band, and the third frequency band are respectively three bandwidth parts (bandwidth parts, BWPs) on one or more carriers.

In embodiments of this application, a frequency band is a segment of contiguous or non-contiguous frequency domain resources.

The method 200 includes but is not limited to the following steps. It should be noted that a sequence of performing the following steps by the network device is determined by a logical relationship between the steps, and numbers of the following steps do not limit the sequence of performing the following steps by the network device.

S201: The network device sends a first sensing signal and a first communication signal in the first frequency band, where the first frequency band includes only a downlink resource.

That the first frequency band includes only the downlink resource may be understood as that the first frequency band is used only for downlink transmission. In other words, the first frequency band is used only by the network device to send a downlink signal, and is not used by the terminal device to send an uplink signal. In other words, the network device does not receive, in the first frequency band, the uplink signal sent by the terminal device. As described above, the first frequency band may be an SDL carrier, the first frequency band may be a BWP of an SDL carrier, or the first frequency band may be a downlink frequency domain resource of an FDD carrier. The downlink signal includes the first sensing signal and the first communication signal. For example, the first communication signal may include one or more of downlink data, downlink information, or a downlink signal.

The network device sends the first sensing signal in the first frequency band, and receives a first echo signal in the first frequency band, where the first echo signal is an echo signal of the first sensing signal.

In embodiments of this application, a sensing signal (including the first sensing signal and the second sensing signal described below) may be an OFDM signal generated based on a sequence. The sequence for generating the sensing signal may be but is not limited to a sequence in a Zadoff-Chu sequence (ZC sequence for short), a pseudo-random sequence, or a predefined sequence. The pseudo-random sequence may be but is not limited to a longest linear feedback shift register sequence (m sequence for short) or a Gold sequence. The predefined sequence may be a random data symbol, for example, may be a random data symbol modulated in a manner like quadrature phase shift keying (quadrature phase shift keying, QPSK) or 16 quadrature amplitude modulation (quadrature amplitude modulation, QAM). This is not limited herein. In addition, an echo signal (for example, the first echo signal and the second echo signal described below) is a signal formed by reflecting the sensing signal by a target on a radio channel.

In embodiments of this application, the target may be various objects that can reflect an electromagnetic wave, for example, a ground object like a mountain, a tree, a forest, or a building, and may further include a movable object like a vehicle, a drone, a pedestrian, or a terminal device. The target may also be referred to as a sensing target, a detected target, a sensed object, a detected object, a sensed device, or the like. This is not limited in this application.

The network device may obtain sensing information of the target based on the received first echo signal. The sensing information may include but is not limited to location information and/or speed information of the target.

For example, the network device may estimate information like a location and a speed of the target from the first echo signal by using a sensing algorithm. A processing process of the sensing algorithm may include performing matched filtering on the first echo signal. However, this application is not limited thereto. In specific implementation, another algorithm may alternatively be used to implement sensing.

In an implementation, the network device may periodically send the first sensing signal in the first frequency band by using a plurality of first beams, and receive the first echo signal. The first beam is a beam used by the network device to send a sensing signal in the first frequency band, and the plurality of first beams may be beams with different coverage ranges. The first sensing signal is a sensing signal sent by the network device in the first frequency band.

The network device may send sensing signals at different moments by using the plurality of first beams, or the network device may send sensing signals at a same moment by using the plurality of first beams.

For example, the network device may send the sensing signals at different moments by using the plurality of first beams. In other words, the network device does not simultaneously transmit the plurality of first beams, but transmits each first beam in a time division manner. For example, the plurality of first beams include eight first beams in different directions. The network device periodically sends a sensing signal in a time period 1 by using a beam 1, to implement sensing of a target in a coverage range of the beam 1. The network device periodically sends a sensing signal in a time period 2 by using a beam 2, to implement sensing of a target in a coverage range of the beam 2. By analogy, the network device periodically sends a sensing signal in a time period 8 by using a beam 8, to implement sensing of a target in a coverage range of the beam 8. In this way, sensing of a target in all coverage ranges of the network device is implemented.

For another example, the network device may send, at a same moment by using the plurality of first beams, sensing signals carried on different frequency domain resources in the first frequency band. In other words, the network device simultaneously transmits the plurality of first beams. In an example, the network device periodically and simultaneously sends sensing signals by using eight first beams in different directions, and the sensing signals sent by using the eight first beams are frequency-divided, to implement sensing of a target in all coverage ranges of the network device. In another example, the network device may periodically and simultaneously send sensing signals in a time period 1 by using a beam 1 and a beam 2, and the sensing signals sent by using the beam 1 and the beam 2 are frequency-divided, to implement sensing of a target in coverage ranges of the beam 1 and the beam 2. The network device periodically and simultaneously sends sensing signals in a time period 2 by using a beam 3 and a beam 4, and the sensing signals sent by using the beam 3 and the beam 4 are frequency-divided, to implement sensing of a target in coverage ranges of the beam 3 and the beam 4. By analogy, sensing of a target in all coverage ranges of the network device is implemented. It should be noted that, in embodiments of this application, a beam used by the network device to send a sensing signal (for example, the first beam for sending the first sensing signal and the second beam that is for sending the second sensing signal and that is described below) is an analog beam.

The foregoing describes a manner in which the network device sends the sensing signal by using the plurality of first beams. It should be noted that if the network device further sends the first communication signal in the first frequency band in a time period for sending the sensing signal, the beam for sending the first communication signal is not limited in embodiments of this application, and may be determined based on specific implementation.

First sensing signals sent by the network device in the first frequency band by using first beams in different directions may be the same or different. For example, sequences used for the first sensing signals sent by using the first beams in different directions may be the same or may be different.

According to the foregoing solution, the network device periodically sends the sensing signal in the first frequency band that includes only the downlink resource. In comparison with sending a sensing signal in a frequency band (for example, the third frequency band that includes both an uplink resource and a downlink resource and that is described below, for example, the third frequency band is a TDD carrier) for performing uplink and downlink communication between the network device and the terminal device, a case in which sensing performed by the network device is interrupted because the network device cannot send a sensing signal on an uplink resource can be avoided, and continuity and reliability of sensing performed by the network device can be improved. In addition, in comparison with a case in which a high-complexity algorithm like an interpolation algorithm or a compressive sensing algorithm needs to be used to aperiodically send a sensing signal, the network device periodically sends the sensing signal in the first frequency band that includes only the downlink resource, so that complexity of an algorithm used by the network device for sensing can be reduced.

Optionally, the network device may determine L synchronization signal blocks based on the first echo signal, where the L synchronization signal blocks are L of N synchronization signal blocks, L is less than N, and N and L are positive integers. The N synchronization signal blocks are, in frequency domain, on a carrier on which the first frequency band is located, and are in a first time period in time domain.

That the N synchronization signal blocks are, in frequency domain, on the carrier on which the first frequency band is located includes: The N synchronization signal blocks are in the first frequency band in frequency domain, or are in a frequency band other than the first frequency band on the carrier on which the first frequency band is located.

In an implementation, the first frequency band is a BWP, and the N synchronization signal blocks are, in frequency domain, in the frequency band other than the first frequency band on the carrier on which the first frequency band is located, and are in the first time period in time domain. The network device sends the L synchronization signal blocks on the carrier on which the first frequency band is located.

For example, the first frequency band is a BWP 1 on the carrier on which the first frequency band is located, and the network device sends a synchronization signal block in a BWP 2 on the carrier on which the first frequency band is located. One SSB burst set (burst set) in the BWP 2 includes N synchronization signal blocks, in other words, the N synchronization signal blocks are in the BWP 2 in frequency domain and are in the first time period in time domain. Directions of beams of the N synchronization signal blocks are different, and the beams may cover all coverage ranges of the network device. The network device may determine, based on the first echo signal of the first sensing signal in the BWP 1, that a terminal device may exist in a coverage range of a beam of the L of the N synchronization signal blocks in the first time period. In this case, the network device sends only the L synchronization signal blocks in the BWP 2 in the first time period, so that each terminal device in the coverage ranges of the network device can receive the synchronization signal block in the BWP 2, and the terminal device can implement downlink synchronization, obtain a system message, and the like in the first frequency band based on the synchronization signal block. In this solution, resource waste and power consumption of the network device can be reduced.

In another implementation, the N synchronization signal blocks are in the first frequency band in frequency domain and are in the first time period in time domain. The network device sends the L synchronization signal blocks in the first frequency band. In this implementation, the first frequency band may be a carrier or a BWP. For example, the synchronization signal block is a synchronization signal (synchronization signal, SS) and physical broadcast channel (physical broadcast channel, PBCH) block (SS and PBCH block, SSB).

The network device may obtain, based on the received first echo signal, sensing information of a target in the coverage ranges of the network device. A location of the target sensed by the network device is a possible location of the terminal device. If the network device detects a target only in a part of the coverage ranges, the network device does not need to send a synchronization signal block in all coverage ranges of the network device. The network device may determine, based on the first echo signal, a location at which a terminal device may exist, and send a synchronization signal block by using a beam that can cover the location at which the terminal device may exist.

For example, one SSB burst set (burst set) of the network device in the first frequency band includes N synchronization signal blocks, directions of beams of the N synchronization signal blocks are different, and the beams may cover all coverage ranges of the network device. The network device may determine, based on the first echo signal, that a terminal device may exist in a coverage range of a beam of the L of the N synchronization signal blocks in the first time period. In this case, the network device sends only the L synchronization signal blocks in the first time period, so that each terminal device in the coverage ranges of the network device can receive the synchronization signal block in the first frequency band, and the terminal device can implement downlink synchronization, obtain a system message, and the like in the first frequency band based on the synchronization signal block. In this solution, resource waste and power consumption of the network device can be reduced.

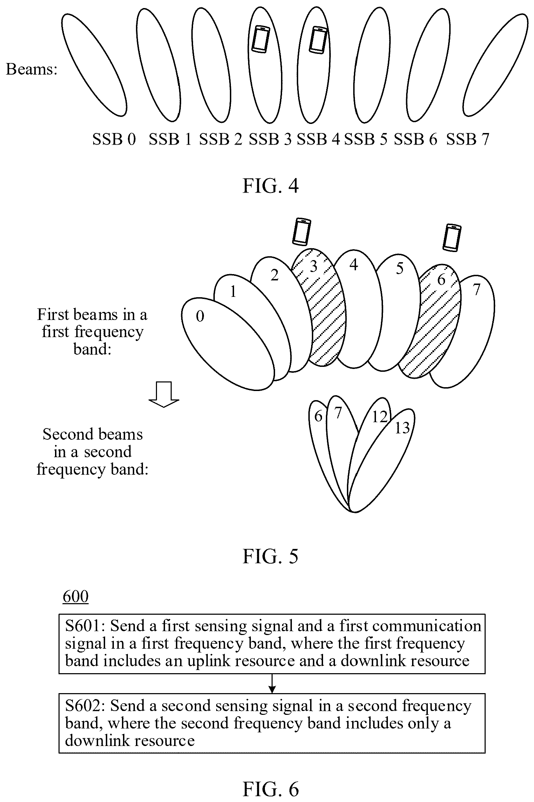

For example, as shown in FIG. 4, one SSB burst set of the network device includes eight SSBs, that is, N=8, and beam directions in which the network device sends the eight SSBs are different. Before the first time period, the network device determines, based on the first echo signal, that a terminal device may exist in coverage ranges of beams of an SSB 3 and an SSB 4 in the eight SSBs in the first time period, that is, L=2. In this case, the network device determines to send only the SSB 3 and the SSB 4 in the eight SSBs in the first time period.

Optionally, the network device sends second indication information in a second time period in the first frequency band, where the second indication information indicates the L synchronization signal blocks, and the second time period is before the first time period.

The network device may notify, by using the second indication information in the second time period before the first time period, the terminal device of the L synchronization signal blocks actually sent by the network device in the first time period. The terminal device detects, based on the second indication information, only the L synchronization signal blocks actually sent by the network device in the first frequency band, so that a quantity of synchronization signal blocks detected by the terminal device and detection complexity can be reduced, thereby reducing power consumption of the terminal device.

For example, as shown in FIG. 4, if the network device determines to send the SSB 3 and the SSB 4 in the first time period, the network device sends the second indication information in the second time period before the first time period, where the second indication information indicates that there are two SSBs in total: the SSB 3 and the SSB 4, that is, L=2. Because a target may be moving or the network device may detect a new target, the network device may determine, based on the first echo signal, K SSBs that cover a terminal device in a time period (for example, a third time period) after the first time period, the network device may send, in the first time period, indication information to indicate the K SSBs sent in the third time period, where K is a positive integer, and K is less than or equal to N.

It should be noted that the network device periodically sends the first sensing signal in the first frequency band by using beams in different directions, and sends, based on the beams in different directions, the first echo signal corresponding to the first sensing signal, to detect mobility information like a location and/or a speed of the terminal device, and predict a location of the terminal device in a future time period based on the mobility information of the terminal device. In this way, the network device determines a beam covering the terminal device and sends a synchronization signal block by using the beam.

In an example, the second indication information may indicate identifiers of the L synchronization signal blocks. The identifier is used to distinguish between different synchronization signal blocks. For example, the identifier may be an index or a number of the synchronization signal block. In an example shown in FIG. 4, the second indication information sent by the network device in the second time period indicates an identifier 3 of the SSB 3 and an identifier 4 of the SSB 4.

In another example, the second indication information includes a bitmap (bitmap) of N bits, the N bits are in one-to-one correspondence with the N synchronization signal blocks in the first frequency band, and each bit indicates whether a corresponding synchronization signal block is sent in the first time period. In an example shown in FIG. 4, the second indication information sent by the network device in the second time period includes eight bits, and the eight bits sequentially correspond to an SSB 0 to an SSB 7 from front to back. For example, one bit indicates "0" to indicate that a corresponding SSB is not sent, and one bit indicates "1" to indicate that a corresponding SSB is sent. In this case, the eight bits are "00011000", bits corresponding to the SSB 3 and the SSB 4 indicate "1", and bits corresponding to other SSBs indicate "0". In this case, the terminal device may determine that the network device sends only the SSB 3 and the SSB 4 in the first time period, that is, L=2. The terminal device may receive the SSB 3 and/or the SSB 4, to implement downlink synchronization, obtain a system message, and the like.

Optionally, the second indication information is carried in a broadcast message. The broadcast message may be a system message, for example, a system information block 1 (system information block, SIB1). However, this application is not limited thereto.

The network device periodically sends a synchronization signal block, or a resource of an SSB burst set in the first frequency band periodically occurs. Duration of the first time period, duration of the second time period, and duration of the third time period are duration of a synchronization signal block periodicity.

For example, the first time period, the second time period, and the third time period may be different synchronization signal block periodicities. For example, the first time period, the second time period, and the third time period are three continuous synchronization signal block periodicities. For example, a start moment of the first time period is an end moment of the second time period. For example, a start moment of the third time period is an end moment of the first time period.

For another example, the first time period and the second time period are two time periods that are separated by at least one synchronization signal block periodicity. A quantity of synchronization signal block periodicities between the first time period and the second time period may be predefined in a protocol or indicated by the network device. For a relationship between the first time period and the third time period, refer to a relationship between the first time period and the second time period.

The first communication signal sent by the network device in the first frequency band may include but is not limited to the synchronization signal block and the second indication information.

S202: The network device sends the second sensing signal in the second frequency band, where the second frequency band includes only a downlink resource.

Optionally, frequency of the second frequency band is higher than frequency of the first frequency band.

As described above, the second frequency band is an SDL frequency band, and is a pure sensing frequency band for sending only the second sensing signal but not a communication signal. For example, the second frequency band may be an SDL carrier.

In an implementation, the network device determines a plurality of second beams based on the first echo signal. That the network device sends the second sensing signal in the second frequency band includes: The network device sends the second sensing signal in the second frequency band through the plurality of second beams.

The second beam is a beam used by the network device to send the second sensing signal in the second frequency band, and the plurality of second beams determined by the network device based on the first echo signal have different beam coverage ranges. The second sensing signal is a sensing signal sent by the network device in the second frequency band, and second sensing signals sent by different second beams may be the same or different.

The network device may send the sensing signals at different moments through the plurality of second beams, or the network device may send the sensing signals at a same moment through the plurality of second beams.

For example, the network device may send the sensing signals at different moments through the plurality of second beams. In other words, the network device does not simultaneously transmit the plurality of second beams, but transmits each second beam in a time division manner. For details, refer to the foregoing described manner in which the network device sends the sensing signals at different moments in the first band by using the plurality of first beams. For brevity, details are not described herein again.

For another example, the network device may send, at a same moment through the plurality of second beams, sensing signals carried on different frequency domain resources in the second frequency band. In other words, the network device simultaneously transmits the plurality of second beams. For details, refer to the foregoing described manner in which the network device sends the sensing signals at the same moment in the first band by using the plurality of first beams. For brevity, details are not described herein again. Optionally, the network device may periodically send the second sensing signal in the second frequency band through the plurality of second beams, and receive the second echo signal. The second echo signal is an echo signal of the second sensing signal.

A beam width of one second beam is less than a beam width of one first beam, and a beam width of one beam may be specifically a main lobe width of the beam. A main lobe width of the second beam is less than a main lobe width of the first beam. Optionally, a main lobe of at least one of the plurality of second beams is in a main lobe of one first beam. In other words, a coverage angle range of the at least one of the plurality of second beams is in a coverage angle range of one first beam, and the coverage angle range of the first beam includes the coverage angle range of the at least one second beam.

For example, the first frequency band supports the network device in sending the first sensing signal by using a maximum of S beams. The plurality of first beams used by the network device to send the first sensing signal are selected from the S beams. The second frequency band supports the network device in sending the second sensing signal by using a maximum of T beams. The plurality of second beams used by the network device to send the second sensing signal are selected from the T beams, where T is greater than S.

For example, at least T second beams in different directions can cover coverage ranges of the S first beams in different directions, where S and T are positive integers, and T is greater than S.

The main lobe width of the second beam is less than the main lobe width of the first beam. The network device sends the second sensing signal in the second frequency band by using the second beam, and receives an echo signal (namely, the second echo signal) of the second sensing signal, so that sensing at a finer granularity can be implemented.

For example, parameters in the first frequency band and the second frequency band are shown in Table 1. The first frequency band includes eight first beams, main lobe beam widths of the eight first beams are 15°, a quantity of first beams is 8, and beam directions of the eight first beams are respectively shown in Table 1. As shown in Table 1, a bit corresponding to each beam in a beam configuration indicates "1" to indicate that the network device sends the first sensing signal in the first frequency band by using the eight first beams. As shown in FIG. 5, the network device may determine, by using the received first echo signal, that a target exists in coverage ranges of a first beam 3 and a first beam 6. The second frequency band includes 16 beams whose main lobe widths are 7.5°, and coverage angle ranges of two of the 16 beams belong to a coverage angle range of one first beam. The network device may determine four second beams based on the first echo signal. The four second beams include a beam 6 and a beam 7 in the second frequency band, and coverage angle ranges of the beam 6 and the beam 7 belong to a coverage angle range of the first beam 3. In addition, the four second beams further include a beam 12 and a beam 13 that are in the second frequency band and whose coverage ranges belong to the first beam 6.

**Table 1**

| | | | | | | | | | | | | | | | | | |
|---|---|---|---|---|---|---|---|---|---|---|---|---|---|---|---|---|---|
| First frequency band | Beam width | 15° | | | | | | | | | | | | | | | |
| | Quantity of beams | 8 | | | | | | | | | | | | | | | |
| | Beam direction | -52.5° | | -37.5° | | -22.5° | | -7.5° | | 7.5° | | 22.5° | | 37.5° | | 52.5° | |
| | Beam configuration | 1 | | 1 | | 1 | | 1 | | 1 | | 1 | | 1 | | 1 | |
| | Whether a target exists in a beam | 0 | | 0 | | 0 | | 1 | | 0 | | 0 | | 1 | | 0 | |
| Second frequency band | Beam width | 7.5° | | | | | | | | | | | | | | | |
| | Quantity of beams | 16 | | | | | | | | | | | | | | | |
| | Beam configuration | 0 | 0 | 0 | 0 | 0 | 0 | 1 | 1 | 0 | 0 | 0 | 0 | 1 | 1 | 0 | 0 |

S203: The network device sends a third communication signal in the third frequency band, where the third frequency band includes a downlink resource and an uplink resource.

Optionally, frequency of the third frequency band is lower than the frequency of the first frequency band.

In an implementation, the first frequency band is in an FR 2, and the third frequency band is in an FR 1. In other words, the first frequency band is a frequency band belonging to a high band, and the third frequency band is a frequency band belonging to a low band.

The third frequency band includes both the downlink resource and the uplink resource. In other words, the third frequency band may be used for both uplink transmission and downlink transmission. For example, the third frequency band is a TDD carrier.

The network device may send first configuration information to the terminal device in the third frequency band, where the first configuration information is used to configure the terminal device to access the carrier on which the first frequency band is located, the first configuration information includes first indication information, and the first indication information indicates the L synchronization signal blocks. The L synchronization signal blocks are synchronization signal blocks actually sent by the network device in the first time period on the carrier on which the first frequency band is located.

The network device may send the first configuration information before the first time period.

For example, the first configuration information may be carried in a radio resource control (radio resource control, RRC) message sent by the network device to the terminal device. For example, the RRC message may be specifically an RRC reconfiguration (RRC reconfiguration) message.

For example, the third frequency band is a carrier of a PCell of the terminal device, that is, the terminal device accesses the network device in the third frequency band. The network device may send the RRC reconfiguration message to the terminal device in the third frequency band, and configure an SCell in a carrier aggregation (carrier aggregation, CA) communication mode for the terminal device by using the RRC reconfiguration message. The RRC reconfiguration message may be used to configure the terminal device to access the SCell, and a carrier of the SCell is the first frequency band. The RRC reconfiguration message includes the first indication information. The network device notifies, by using the first indication information, the terminal device of the L synchronization signal blocks sent by the network device in the first frequency band in the first time period. As described above, the L synchronization signal blocks are the L of the N synchronization signal blocks, L is less than N, N and L are positive integers, and the N synchronization signal blocks are in the first frequency band in frequency domain and are in the first time period in time domain. In this way, the terminal device may attempt to search for the L synchronization signal blocks based on the first indication information, and implement downlink synchronization with an SCell in the first frequency band based on at least one of the L synchronization signal blocks, so that the terminal device can receive a communication signal in the SCell in the first frequency band, for example, the terminal device can receive the first communication signal sent by the network device in the first frequency band. This can reduce power consumption and detection complexity caused by blind detection of a synchronization signal block by the terminal device. In addition, the network device may send a downlink signal to the terminal device in the first frequency band and the third frequency band, so that a downlink transmission rate of the terminal device can be increased.

In an implementation, the first frequency band is a carrier of the SCell. After the terminal device completes the downlink synchronization in the first frequency band, the terminal device is in an inactive state in the first frequency band. When the network device schedules the terminal device to receive data in the first frequency band, the terminal device enters an active state from the inactive state.

For example, the network device broadcasts, in a SIB1 in each SSB periodicity in the first frequency band, an SSB actually sent in a next SSB periodicity. In this case, when the terminal device is in the inactive state in the first frequency band, the terminal device may determine, by receiving the SSB and reading a master information block (master information block, MIB) on a PBCH, a time-frequency resource carrying the SIB1. The SSB actually sent by the network device in the next SSB periodicity may be obtained by receiving the SIB1. In this way, beam management, mobility management, and the like are performed. This reduces complexity of detecting and measuring an SSB in the first frequency band by the terminal device.

According to the solution provided in this application, the network device can periodically send, in the frequency band combination manner provided in this application, a sensing signal in the communication and sensing frequency band that includes only the downlink resource, to perform target sensing, for example, sensing information of a target is obtained in the communication and sensing frequency band, and a downlink communication signal may be sent in the communication and sensing frequency band, so that a downlink communication capacity can be improved. Further, the network device may send a beam with a narrower granularity in the pure sensing frequency band, so that sensing precision is improved, and the communication and the target sensing are integrated. In addition, the network device sends a sensing signal in a frequency band (for example, the first frequency band and/or the second frequency band) that includes only a downlink resource. In comparison with sending a sensing signal in a frequency band (for example, the third frequency band) in which the network device communicates with the terminal device, a case in which sensing performed by the network device is interrupted because the network device cannot send a sensing signal on an uplink resource can be avoided, continuity and reliability of sensing performed by the network device can be improved, and complexity of an algorithm used by the network device for sensing can be reduced.

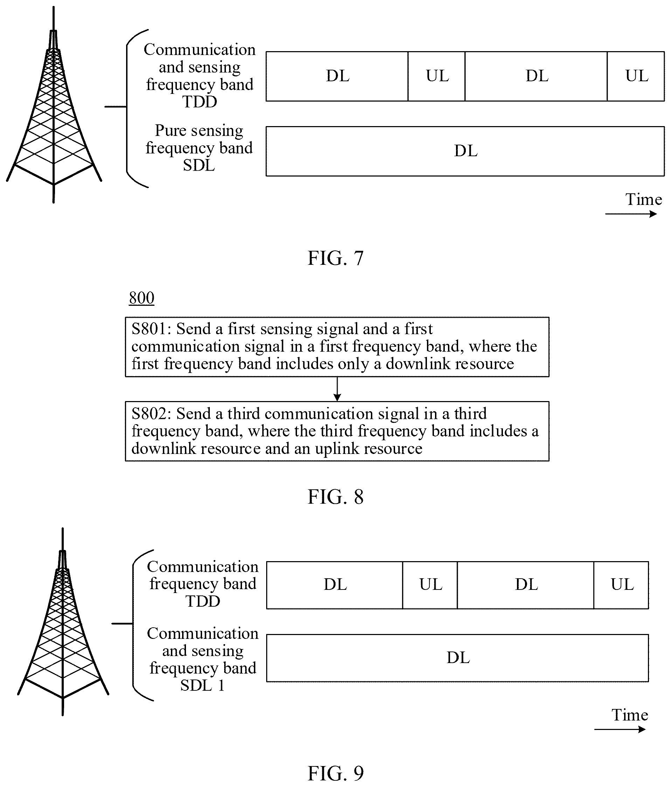

FIG. 6 is another schematic flowchart of a communication method according to an embodiment of this application. The method shown in FIG. 6 provides a frequency band combination manner of a network device. An operating frequency band of the network device includes a first frequency band and a second frequency band. The first frequency band may be referred to as a communication and sensing frequency band, and may be used by the network device to communicate with a terminal device and used by the network device to send a sensing signal. The second frequency band may be referred to as a pure sensing frequency band, and is used by the network device to send a sensing signal. The frequency band combination manner of the network device may be shown in FIG. 7.

In an implementation, the first frequency band and the second frequency band are respectively located on two carriers. For example, the first frequency band is a TDD carrier, and the second frequency band is an SDL carrier.

In another implementation, the first frequency band and the second frequency band are respectively two BWPs on one or more carriers.

The embodiment shown in FIG. 6 provides a method for integrating communication and sensing by the network device by using a frequency band combination of the first frequency band and the second frequency band.

S601: The network device sends a first sensing signal and a first communication signal in the first frequency band, where the first frequency band includes an uplink resource and a downlink resource.

For example, the first frequency band is a TDD carrier that includes both an uplink resource and a downlink resource. The network device may send the first communication signal (that is, a downlink communication signal) on the downlink resource of the first frequency band, and receive an uplink communication signal from the terminal device on the uplink resource of the first frequency band. This implements communication between the network device and the terminal device.

The network device may further send the first sensing signal on the downlink resource of the first frequency band, and receive a first echo signal in the first frequency band, where the first echo signal is an echo signal of the first sensing signal. The network device may obtain sensing information of a target based on the first echo signal, so that the network device can sense the target in a coverage range. The network device may periodically send the first sensing signal in the first frequency band by using a plurality of first beams, and receive the first echo signal.

Optionally, the network device may determine L synchronization signal blocks based on the first echo signal, where the L synchronization signal blocks are L of N synchronization signal blocks, L is less than N, N and L are positive integers, and the L synchronization signal blocks are, in frequency domain, on a carrier on which the first frequency band is located, and are in a first time period in time domain.

That the L synchronization signal blocks are, in frequency domain, on the carrier on which the first frequency band is located includes: The L synchronization signal blocks are in the first frequency band in frequency domain, or are in a frequency band other than the first frequency band on the carrier on which the first frequency band is located. For details, refer to the descriptions in the embodiment shown in FIG. 2.

The network device may determine, based on the first echo signal, that a terminal device may exist in a coverage range of a beam of the L of the N synchronization signal blocks in the first time period. In this case, the network device sends only the L synchronization signal blocks in the first time period on the carrier on which the first frequency band is located, so that the terminal device can implement downlink synchronization, obtain a system message, and the like based on at least one of the L synchronization signal blocks on the carrier on which the first frequency band is located. In this solution, resource waste and power consumption of the network device can be reduced.

For a manner in which the network device sends the first sensing signal in the first frequency band, a manner in which the network device determines, based on the first echo signal, the L synchronization signal blocks actually sent in the first frequency band, and the like, refer to the descriptions in the embodiment shown in FIG. 2. It should be understood that a difference between the first frequency band in the embodiment shown in FIG. 6 and the first frequency band in the embodiment shown in FIG. 2 lies in that the first frequency band in the embodiment shown in FIG. 6 is a TDD frequency band that includes a downlink resource and an uplink resource, while the first frequency band in the embodiment shown in FIG. 2 includes only a downlink resource.

Optionally, the network device sends second indication information in a second time period in the first frequency band, where the second indication information indicates the L synchronization signal blocks, and the second time period is before the first time period.

The network device may notify, by using the second indication information, the terminal device of the L synchronization signal blocks actually sent by the network device in the first time period on the carrier on which the first frequency band is located. The terminal device may detect, based on the second indication information, only the L synchronization signal blocks actually sent by the network device on the carrier on which the first frequency band is located, so that a quantity of synchronization signal blocks detected by the terminal device and detection complexity can be reduced, thereby reducing power consumption of the terminal device.

By way of example and not limitation, the second indication information is carried in a broadcast message. The broadcast message may be a system message, for example, a system information block 1 (system information block, SIB1). However, this application is not limited thereto.

Optionally, duration of the first time period and duration of the second time period are duration of a synchronization signal block periodicity, or duration of the first time period is equal to duration of the second time period, and a start moment of the first time period is an end moment of the second time period.

S602: The network device sends a second sensing signal in the second frequency band, where the second frequency band includes only a downlink resource.

For a specific implementation of S602, refer to the descriptions of S202 in the embodiment shown in FIG. 2. Brief descriptions are provided below. Details are not described again.

Optionally, both the first frequency band and the second frequency band are in a high band, and frequency of the second frequency band is higher than frequency of the first frequency band; and/or the first frequency band is in an FR 2, and the frequency of the second frequency band is higher than the frequency of the first frequency band.

Optionally, the network device determines a plurality of second beams based on the first echo signal, where main lobes of the plurality of second beams are in a main lobe of a first beam, the first beam is a beam for sending the first sensing signal, and a main lobe width of the second beam is less than a main lobe width of the first beam. In addition, the sending the second sensing signal in the second frequency band includes: The network device sends the second sensing signal in the second frequency band through the plurality of second beams.

For example, the first frequency band supports the network device in sending the first sensing signal by using a maximum of S beams. The plurality of first beams used by the network device to send the first sensing signal are selected from the S beams. The second frequency band supports the network device in sending the second sensing signal by using a maximum of T beams. The plurality of second beams used by the network device to send the second sensing signal are selected from the T beams, where T is greater than S.

According to the frequency band combination manner provided in the embodiment shown in FIG. 6, the network device can perform both communication and target sensing in the communication and sensing frequency band, to integrate the communication and the target sensing. Further, the network device may send a beam with a narrower granularity in the pure sensing frequency band, to improve sensing precision.

FIG. 8 is another schematic flowchart of a communication method according to an embodiment of this application. The method shown in FIG. 8 provides a frequency band combination manner of a network device. An operating frequency band of the network device includes a first frequency band and a third frequency band. The third frequency band may be referred to as a communication frequency band, and is a frequency band used by the network device to communicate with a terminal device. The first frequency band may be referred to as a communication and sensing frequency band, may be used by the network device to send a downlink communication signal to the terminal device and used by the network device to send a sensing signal, and may be referred to as an SDL frequency band, for example, denoted as an SDL 1. The frequency band combination manner of the network device may be shown in FIG. 9.

In an implementation, the first frequency band and the third frequency band are respectively located on two carriers.

For example, the first frequency band is an SDL carrier, and the third frequency band is a TDD carrier. Alternatively, the first frequency band is a downlink frequency domain resource of an FDD carrier, and the third frequency band is a TDD carrier.

In another implementation, the first frequency band and the third frequency band are respectively two BWPs on one or more carriers.

The embodiment shown in FIG. 8 provides a method for integrating communication and sensing by the network device by using a frequency band combination of the first frequency band and the third frequency band. It should be noted that operations performed by the network device in the first frequency band and the third frequency band and functions implemented in the steps are respectively the same as the operations performed by the network device in the first frequency band and the third frequency band and the functions implemented in the steps in the embodiment shown in FIG. 2. Brief descriptions are provided below. For details, refer to the descriptions in the embodiment shown in FIG. 2. Details are not described again.

S801: The network device sends a first sensing signal and a first communication signal in the first frequency band, where the first frequency band includes only a downlink resource.

The network device sends the first sensing signal in the first frequency band, and receives a first echo signal in the first frequency band, where the first echo signal is an echo signal of the first sensing signal. The network device may obtain sensing information of a target based on the first echo signal, so that the network device can sense the target in a coverage range. The network device may periodically send the first sensing signal in the first frequency band by using a plurality of first beams, and receive the first echo signal.

Optionally, the network device may determine L synchronization signal blocks based on the first echo signal, where the L synchronization signal blocks are L of N synchronization signal blocks, L is less than N, N and L are positive integers, and the N synchronization signal blocks are, in frequency domain, on a carrier on which the first frequency band is located, and are in a first time period in time domain. The network device sends the L synchronization signal blocks in the first frequency band.

The network device may determine, based on the first echo signal, that a terminal device may exist in a coverage range of a beam of the L of the N synchronization signal blocks in the first time period. In this case, the network device sends only the L synchronization signal blocks in the first time period on the carrier on which the first frequency band is located. In this way, the terminal device can implement downlink synchronization, obtain a system message, and the like based on at least one of the L synchronization signal blocks in the first frequency band. In this solution, resource waste and power consumption of the network device can be reduced.

Optionally, the network device sends second indication information in a second time period in the first frequency band, where the second indication information indicates the L synchronization signal blocks, and the second time period is before the first time period.

The network device may notify, by using the second indication information, the terminal device of the L synchronization signal blocks actually sent by the network device in the first time period in the first frequency band. The terminal device may detect, based on the second indication information, only the L synchronization signal blocks actually sent by the network device in the first frequency band, so that a quantity of synchronization signal blocks detected by the terminal device and detection complexity can be reduced, thereby reducing power consumption of the terminal device.

Optionally, duration of the first time period and duration of the second time period are duration of a synchronization signal block periodicity, or duration of the first time period is equal to duration of the second time period, and a start moment of the first time period is an end moment of the second time period.

S802: The network device sends a third communication signal in the third frequency band, where the third frequency band includes an uplink resource and a downlink resource.

Optionally, the first frequency band is in an FR 2, and the third frequency band is in an FR 1. Frequency of the first frequency band is higher than frequency of the third frequency band.

The network device may send first configuration information in the third frequency band, where the first configuration information is used to configure the first frequency band, the first configuration information includes first indication information, and the first indication information indicates the L synchronization signal blocks. The L synchronization signal blocks are synchronization signal blocks actually sent by the network device in the first time period in the first frequency band.

The terminal device may determine, based on the first indication information in the first configuration information, the L synchronization signal blocks actually sent by the network device in the first frequency band. The terminal device attempts to search for the L synchronization signal blocks, and implements downlink synchronization in the first frequency band based on the at least one of the L synchronization signal blocks, so that the terminal device can receive a downlink communication signal in the first frequency band, for example, the terminal device can receive the first communication signal sent by the network device in the first frequency band. This can reduce power consumption and detection complexity caused by blind detection of a synchronization signal block by the terminal device. In addition, the network device may send a downlink signal to the terminal device in the first frequency band and the third frequency band, so that a downlink transmission rate of the terminal device can be increased.

Optionally, the third frequency band is a carrier of a primary cell PCell of the terminal device, and the first frequency band is a carrier of a secondary cell SCell of the terminal device.

The network device may send the first configuration information before the first time period.

For example, the first configuration information may be carried in a radio resource control (radio resource control, RRC) message sent by the network device to the terminal device. For example, the RRC message may be specifically an RRC reconfiguration (RRC reconfiguration) message.

According to the frequency band combination manner provided in the embodiment shown in FIG. 8, the network device can send a sensing signal in the first frequency band that includes only the downlink resource. In comparison with sending a sensing signal in the third frequency band in which the network device communicates with the terminal device, a case in which sensing performed by the network device is interrupted because the network device cannot send a sensing signal on an uplink resource can be avoided, continuity and reliability of the sensing performed by the network device can be improved, and complexity of an algorithm used by the network device for sensing can be reduced. The network device may further send a downlink communication signal in the first frequency band for sending the sensing signal, so that a downlink communication capacity can be improved. In this way, the communication and the sensing are integrated.

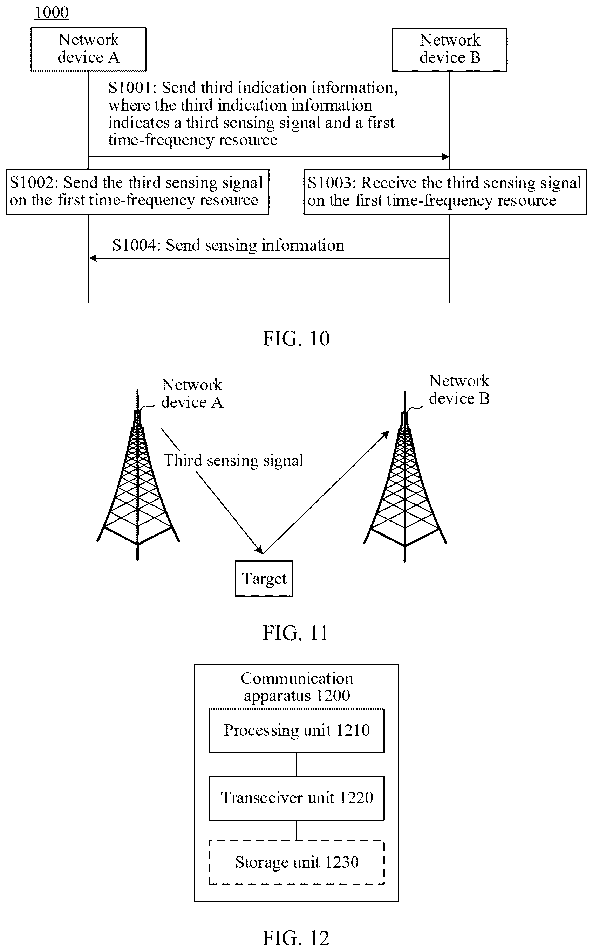

FIG. 10 is another schematic flowchart of a communication method 1000 according to an embodiment of this application. The communication method 1000 shown in FIG. 10 may be applied to a scenario shown in FIG. 11. As shown in FIG. 11, a network device A sends a third sensing signal, and the third sensing signal is received by a network device B after being reflected by a target in an environment. The network device B determines sensing information based on the received third sensing signal, and sends the sensing information to the network device A. Optionally, when sending the third sensing signal, the network device A may send a communication signal in a manner like time division multiplexing, frequency division multiplexing, or space division multiplexing, so that the network device can both send a sensing signal to sense a target, and send a communication signal to communicate with another communication device. The following describes the communication method 1000. The communication method 1000 includes but is not limited to the following steps.

S1001: The network device A sends third indication information to the network device B, where the third indication information indicates the third sensing signal and a first time-frequency resource, the third sensing signal is a sensing signal sent by the network device A in a first frequency band, and the first time-frequency resource is a time-frequency resource that is in the first frequency band and that is used to carry the third sensing signal.

Correspondingly, the network device B receives the third indication information from the network device A, and determines, based on the third indication information, the third sensing signal sent by the network device A on the first time-frequency resource in the first frequency band.

For example, the third indication information may specifically indicate a sequence used by the third sensing signal, and the third indication information may further specifically indicate a time domain resource and a frequency domain resource that are included in the first time-frequency resource.

Optionally, the network device A may send the third indication information to the network device B through an interface between the network devices. Alternatively, the network device A may send the indication information to the network device B through an air interface (air interface), that is, by using a radio resource. For example, the network device A may send the third indication information in an RRC message, a medium access control (medium access control, MAC) control element (control element, CE), or other signaling or control elements. This is not limited in this application.

S1002: The network device A sends the third sensing signal on the first time-frequency resource.

S 1003: The network device B receives the third sensing signal on the first time-frequency resource.

The third sensing signal received by the network device B on the first time-frequency resource may be understood as an echo signal/a reflected signal formed by reflecting, by the target, the third sensing signal sent by the network device A. Therefore, step S1003 may also be described as follows: The network device B receives a third echo signal on the first time-frequency resource, where the third echo signal is an echo signal of the third sensing signal sent by the network device A.

The network device B determines the sensing information based on the received third sensing signal, where the sensing information includes speed information and/or location information of the target. For example, the network device B may estimate the location information, the speed information, and/or the like of the target from the third sensing signal by using a sensing algorithm. A processing process of the sensing algorithm may include performing matched filtering on the third sensing signal. However, this application is not limited thereto. In specific implementation, another algorithm may alternatively be used to implement sensing.

S 1003: The network device B sends the sensing information to the network device A.

Correspondingly, the network device A receives the sensing information from the network device B. An interface for transferring the sensing information between the network device B and the network device A may be the same as or different from the interface for transferring the third indication information. This is not limited in this application.

Optionally, after receiving the sensing information, the network device A determines L synchronization signal blocks based on the sensing information, where the L synchronization signal blocks are L of N synchronization signal blocks, L is less than N, and L and N are positive integers. The L synchronization signal blocks are, in frequency domain, on a carrier on which the first frequency band is located, and are in a first time period in time domain.

That the L synchronization signal blocks are, in frequency domain, on the carrier on which the first frequency band is located includes: The L synchronization signal blocks are in the first frequency band in frequency domain, or are in a frequency band other than the first frequency band on the carrier on which the first frequency band is located.

The network device A may obtain, based on the sensing information, a possible location of a terminal device in a coverage range of the network device A. If the network device A determines, based on the sensing information, that a target may exist only in the coverage range, the network device A determines that a beam of the L synchronization signal blocks can cover a location at which a terminal device may exist. In this case, the network device A sends only the L of the N synchronization signal blocks.

Optionally, the network device A sends second indication information in a second time period in the first frequency band, where the second indication information indicates the L synchronization signal blocks, and the second time period is before the first time period.

The terminal device detects, based on the second indication information, only the L synchronization signal blocks actually sent by the network device A in the first frequency band, so that a quantity of synchronization signal blocks detected by the terminal device and detection complexity can be reduced, thereby reducing power consumption of the terminal device.

Optionally, the network device A may send first configuration information to the terminal device in a third frequency band, where the first configuration information is used to configure the terminal device to access the carrier on which the first frequency band is located, the first configuration information includes first indication information, and the first indication information indicates the L synchronization signal blocks determined by the network device A based on the sensing information.

Optionally, the network device A determines, based on the sensing information, a configuration of a second sensing signal sent in a second frequency band. For example, the network device A determines, based on the sensing information, a configuration of a beam for sending the second sensing signal in the second frequency band.

In the embodiment shown in FIG. 10, the first frequency band is a communication and sensing frequency band. For a definition of the first frequency band, refer to the definition of the first frequency band in the embodiment shown in FIG. 2. For example, the first frequency band includes only a downlink resource, and the network device A further sends a downlink communication signal in the first frequency band. Alternatively, for a definition of the first frequency band, refer to the definition of the first frequency band in the embodiment shown in FIG. 6. The first frequency band includes both a downlink resource and an uplink resource. In the first frequency band, the network device A may both send a sensing signal and communicate with the terminal device. The third frequency band is a communication frequency band. For a definition of the third frequency band, refer to the definition of the third frequency band in the embodiment shown in FIG. 2 or FIG. 8. The second frequency band is a pure sensing frequency band. For a definition of the second frequency band, refer to the definition of the second frequency band in the embodiment shown in FIG. 2 or FIG. 6. For brevity, details are not described herein again.

It should be understood that a main difference between the embodiment shown in FIG. 10 and the embodiments shown in FIG. 2, FIG. 6, and FIG. 8 lies in that, in the embodiment shown in FIG. 10, the third echo signal formed by reflecting, by the target, the third sensing signal sent by the network device A in the first frequency band is received by the network device B, and the network device B determines the sensing information based on the third echo signal and then notifies the network device A of the sensing information. The network device A obtains the sensing information from the network device B, instead of receiving the echo signal of the third sensing signal and determining the sensing information based on the echo signal. For another part in the embodiment shown in FIG. 10 that is the same as that described above, refer to the descriptions in the foregoing embodiments for implementation. For brevity, details are not described herein again.

In an implementation, after determining the sensing information based on the received third sensing signal, the network device B may determine, based on the sensing information, a synchronization signal block actually sent by the network device B on the carrier on which the first frequency band is located, and indicate the actually sent synchronization signal block by using indication information on the carrier on which the first frequency band is located. Optionally, the network device B may configure, in the communication frequency band by using the configuration information, the terminal device to access the carrier on which the first frequency band is located, and indicate, to the terminal device, the synchronization signal block actually sent by the network device B on the carrier on which the first frequency band is located. Optionally, the network device B may further determine, based on the sensing information, a configuration of a sensing signal sent by the network device B in the pure sensing frequency band of the network device B. For details, refer to the foregoing descriptions for implementation. For brevity, details are not described herein again.

According to the solution provided in the embodiment shown in FIG. 10, the network device A sends the sensing signal, and the network device B receives the sensing signal that is from the network device A and that is reflected by the target, so that the network device can integrate communication and target sensing.

The foregoing describes in detail the method provided in this application with reference to the accompanying drawings. The following accompanying drawings describe a communication apparatus and a communication device provided this application. To implement functions in the methods provided in this application, network elements may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 12 is a block diagram of a communication apparatus according to this application. As shown in FIG. 12, the communication apparatus 1200 may include a transceiver unit 1220 and a processing unit 1210. The communication apparatus 1200 may be configured in a communication device (for example, a terminal device or a network device). For example, the communication apparatus 1200 may be a chip configured in the communication device. However, this application is not limited thereto.

The communication apparatus 1200 may include units configured to perform the method performed by the network device or the terminal device in the communication method 200 shown in FIG. 2. In addition, the units in the communication apparatus 1200 and the foregoing other operations and/or functions are separately used to implement a corresponding procedure in the communication method 200 shown in FIG. 2.

In an implementation, the communication apparatus 1200 corresponds to the network device in the communication method 200 shown in FIG. 2. The transceiver unit 1220 is configured to send a first sensing signal and a first communication signal in a first frequency band. The transceiver unit 1220 is further configured to send a second sensing signal in a second frequency band. In addition, the transceiver unit 1220 is further configured to send a third communication signal in a third frequency band.

Optionally, the processing unit 1210 is configured to control the transceiver unit 1220 to receive or send a signal.

In another implementation, the communication apparatus 1200 corresponds to the terminal device in the communication method 200 shown in FIG. 2. The transceiver unit 1220 is configured to receive first configuration information in a third frequency band, where the first configuration information is used to configure a first frequency band, the first configuration information includes first indication information, and the first indication information indicates L synchronization signal blocks. In addition, the processing unit 1210 is configured to control the transceiver unit 1220 to detect the L synchronization signal blocks in the first frequency band.

Optionally, the transceiver unit 1220 is further configured to perform data transmission with a network device in the first frequency band.

In still another implementation, the communication apparatus 1200 corresponds to the network device in the communication method 600 shown in FIG. 6. The transceiver unit 1220 is configured to send a first sensing signal and a first communication signal in a first frequency band. The transceiver unit 1220 is further configured to send a second sensing signal in a second frequency band.

Optionally, the processing unit 1210 is configured to control the transceiver unit 1220 to receive or send a signal.

In another implementation, the communication apparatus 1200 corresponds to the network device in the communication method 800 shown in FIG. 8. The transceiver unit 1220 is configured to send a first sensing signal and a first communication signal in a first frequency band. In addition, the transceiver unit 1220 is further configured to send a third communication signal in a third frequency band.

Optionally, the processing unit 1210 is configured to control the transceiver unit 1220 to receive or send a signal.

The foregoing implementations may further include the following optional implementations.

Optionally, the transceiver unit 1220 is further configured to receive a first echo signal in the first frequency band, where the first echo signal is an echo signal of the first sensing signal.

Optionally, the processing unit 1210 is further configured to determine L synchronization signal blocks based on the first echo signal, where the L synchronization signal blocks are L of N synchronization signal blocks, L is less than N, N and L are positive integers, and the N synchronization signal blocks are in the first frequency band in frequency domain and are in a first time period in time domain. In addition, the transceiver unit is further configured to send the L synchronization signal blocks.

Optionally, the transceiver unit 1220 is further configured to send first configuration information in the third frequency band, where the first configuration information is used to configure the first frequency band, the first configuration information includes first indication information, and the first indication information indicates the L synchronization signal blocks.

Optionally, the transceiver unit 1220 is further configured to send second indication information in a second time period in the first frequency band, where the second indication information indicates the L synchronization signal blocks, and the second time period is before the first time period.

Optionally, the processing unit 1210 is further configured to determine a plurality of second beams based on the first echo signal, where a main lobe width of the second beam is less than a main lobe width of a first beam, and the first beam is a beam for sending the first sensing signal. The transceiver unit 1220 is specifically configured to send the second sensing signal in the second frequency band through the plurality of second beams.

It should be understood that when the communication apparatus 1200 is the chip configured in (or used in) in the communication device (for example, the terminal device or the network device), the transceiver unit 1220 in the communication apparatus 1200 may be an input/output interface or circuit of the chip, and the processing unit 1210 in the communication apparatus 1200 may be a processor in a chip.

Optionally, the communication apparatus 1200 may further include a storage unit 1230. The storage unit 1230 may be configured to store instructions or data. The processing unit 1210 may execute the instructions or the data stored in the storage unit, to enable the communication apparatus to implement a corresponding operation.

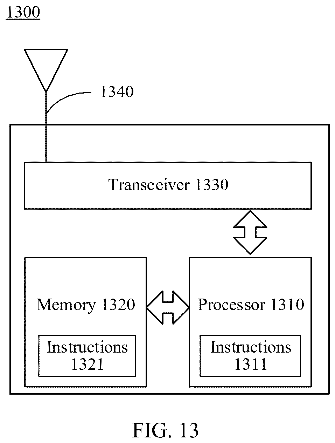

In a possible design, the communication apparatus 1200 may correspond to a communication apparatus 1300 shown in FIG. 13. The transceiver unit 1220 in the communication apparatus 1200 may be implemented through a communication interface (for example, a transceiver or an input/output interface), for example, may correspond to a transceiver 1330 in the communication apparatus 1300 shown in FIG. 13. The processing unit 1210 in the communication apparatus 1200 may be implemented by at least one processor, for example, may correspond to a processor 1310 in the communication apparatus 1300 shown in FIG. 13. Alternatively, the processing unit 1210 in the communication apparatus 1200 may be implemented through at least one logic circuit. The storage unit 1230 in the communication apparatus 1200 may correspond to a memory 1320 in the communication apparatus 1300 shown in FIG. 13.

It should be further understood that, a specific process in which each unit performs the foregoing corresponding steps has been described in detail in the foregoing methods. For brevity, details are not described herein again.

FIG. 13 is a diagram of a structure of a communication apparatus 1300 according to an embodiment of this application. As shown in FIG. 13, the communication apparatus 1300 includes one or more processors 1310. The processor 1310 may be configured for internal processing of the apparatus, to implement a specific control processing function. Optionally, the processor 1310 includes instructions 1311. Optionally, the processor 1310 may store data.

Optionally, the communication apparatus 1300 includes one or more memories 1320, configured to store instructions 1321. Optionally, the memory 1320 may further store data. The processor and the memory may be separately disposed, or may be integrated together.

Optionally, the communication apparatus 1300 may further include a transceiver 1330 and/or an antenna 1340. The transceiver 1330 may be configured to send information to another apparatus or receive information from another apparatus. The transceiver 1330 may be referred to as a transceiver machine, a transceiver circuit, an input/output interface, or the like, and is configured to implement a transceiver function of the communication apparatus 1300 through the antenna 1340. Optionally, the transceiver 1330 includes a transmitter (transmitter) and a receiver (receiver).

In this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams in this application. The general-purpose processor may be a microprocessor, any conventional processor, or the like. The steps of the methods with reference to this application may be directly performed and completed by a hardware processor, or may be performed and completed by a combination of hardware and software modules in the processor.

In this application, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction or a data structure and that can be accessed by a computer, but is not limited thereto. The memory in this application may alternatively be a circuit or any other apparatus that can implement a storage function, and is configured to store program instructions and/or data.

This application further provides a processing apparatus, including a processor and a (communication) interface. The processor is configured to perform the method provided in the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on a chip (system on a chip, SoC), a central processing unit (central processing unit, CPU), a network processor (network processor, NP), a digital signal processing circuit (digital signal processor, DSP), a microcontroller unit (microcontroller unit, MCU), a programmable controller (programmable logic device, PLD), or another integrated chip.

This application further provides a computer-readable storage medium. The computer-readable storage medium stores a computer program or instructions. When the computer program or the instructions are run, the method performed by the network device or the terminal device in the foregoing method embodiments is implemented. In this way, the functions described in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a read-only memory ROM, a random access memory RAM, a magnetic disk, or an optical disc.

According to the method provided in this application, this application further provides a computer program product. The computer program product includes computer program code. When the computer program code is executed by one or more processors, an apparatus including the processor is enabled to perform the method shown in FIG. 2, FIG. 6, FIG. 8, or FIG. 10.

All or some of the technical solutions provided in this application may be implemented by software, hardware, firmware, or any combination thereof. When the software is used to implement embodiments, all or some of embodiments may be implemented in a form of a computer program product. The computer program product includes one or more computer instructions. When the computer program instructions are loaded and executed on the computer, the procedure or functions according to this application are all or partially generated. The computer instructions may be stored in a computer-readable storage medium, or transmitted from a computer-readable storage medium to another computer-readable storage medium. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

According to the method provided in this application, this application further provides a system, including the foregoing one or more terminal devices. The system may further include the foregoing one or more LMF devices. Optionally, the system may further include the foregoing plurality of access network devices.

In the several embodiments provided in this application, it should be understood that the disclosed system, apparatus, and method may be implemented in another manner. For example, the described apparatuses are merely examples. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending a first sensing signal and a first communication signal in a first frequency band;
sending a second sensing signal in a second frequency band; and
sending a third communication signal in a third frequency band, wherein
the first frequency band comprises only a downlink resource, the second frequency band comprises only a downlink resource, and the third frequency band comprises an uplink resource and a downlink resource.

2. The method according to claim 1, wherein frequency of the second frequency band is higher than frequency of the first frequency band, and frequency of the third frequency band is lower than the frequency of the first frequency band.

3. The method according to claim 1 or 2, wherein the first frequency band is in a frequency range FR 2, and the third frequency band is in a frequency range FR 1.

4. The method according to any one of claims 1 to 3, wherein the method further comprises:
receiving a first echo signal in the first frequency band, wherein the first echo signal is an echo signal of the first sensing signal.

5. The method according to claim 4, wherein the method further comprises:
determining L synchronization signal blocks based on the first echo signal, wherein the L synchronization signal blocks are L of N synchronization signal blocks, L is less than N, N and L are positive integers, and the N synchronization signal blocks are in the first frequency band in frequency domain and are in a first time period in time domain; and
sending the L synchronization signal blocks.

6. The method according to claim 5, wherein the method further comprises:
sending first configuration information in the third frequency band, wherein the first configuration information is used to configure the first frequency band, the first configuration information comprises first indication information, and the first indication information indicates the L synchronization signal blocks.

7. The method according to claim 5, wherein the method further comprises:
sending second indication information in a second time period in the first frequency band, wherein the second indication information indicates the L synchronization signal blocks, and the second time period is before the first time period.

8. The method according to claim 7, wherein duration of the first time period and duration of the second time period are duration of a synchronization signal block periodicity, or duration of the first time period is equal to duration of the second time period, and a start moment of the first time period is an end moment of the second time period.

9. The method according to any one of claims 5 to 8, wherein the method further comprises:
determining a plurality of second beams based on the first echo signal, wherein a main lobe width of the second beam is less than a main lobe width of a first beam, and the first beam is a beam for sending the first sensing signal; and
the sending a second sensing signal in a second frequency band comprises:
sending the second sensing signal in the second frequency band through the plurality of second beams.

10. The method according to any one of claims 1 to 9, wherein the first frequency band, the second frequency band, and the third frequency band are respectively located on three carriers; or the first frequency band, the second frequency band, and the third frequency band are respectively three bandwidth parts BWPs on one or more carriers.

11. The method according to any one of claims 1 to 10, wherein the third frequency band is a carrier of a primary cell PCell of a terminal device, and the first frequency band is a carrier of a secondary cell SCell of the terminal device.

12. A communication method, comprising:
sending a first sensing signal and a first communication signal in a first frequency band; and
sending a second sensing signal in a second frequency band, wherein
the first frequency band comprises an uplink resource and a downlink resource, and the second frequency band comprises only a downlink resource.

13. The method according to claim 12, wherein frequency of the second frequency band is higher than frequency of the first frequency band.

14. The method according to claim 12 or 13, wherein the method further comprises:
receiving a first echo signal in the first frequency band, wherein the first echo signal is an echo signal of the first sensing signal.

15. The method according to claim 14, wherein the method further comprises:
determining L synchronization signal blocks based on the first echo signal, wherein the L synchronization signal blocks are L of N synchronization signal blocks, L is less than N, N and L are positive integers, and the N synchronization signal blocks are in the first frequency band in frequency domain and are in a first time period in time domain; and
sending the L synchronization signal blocks.

16. The method according to claim 15, wherein the method further comprises:
sending second indication information in a second time period in the first frequency band, wherein the second indication information indicates the L synchronization signal blocks, and the second time period is before the first time period.

17. The method according to claim 15 or 16, wherein the method further comprises:
determining a plurality of second beams based on the first echo signal, wherein a main lobe width of the second beam is less than a main lobe width of a first beam, and the first beam is a beam for sending the first sensing signal; and
the sending a second sensing signal in a second frequency band comprises:
sending the second sensing signal in the second frequency band through the plurality of second beams.

18. The method according to any one of claims 12 to 17, wherein the first frequency band and the second frequency band are respectively located on two carriers; or the first frequency band and the second frequency band are respectively two bandwidth parts BWPs on one or more carriers.

19. A communication method, comprising:
sending a first sensing signal and a first communication signal in a first frequency band; and
sending a third communication signal in a third frequency band, wherein
the first frequency band comprises only a downlink resource, and the third frequency band comprises an uplink resource and a downlink resource.

20. The method according to claim 19, wherein frequency of the first frequency band is higher than frequency of the third frequency band.

21. The method according to claim 19 or 20, wherein the method further comprises:
receiving a first echo signal in the first frequency band, wherein the first echo signal is an echo signal of the first sensing signal.

22. The method according to claim 21, wherein the method further comprises:
determining L synchronization signal blocks based on the first echo signal, wherein the L synchronization signal blocks are L of N synchronization signal blocks, L is less than N, N and L are positive integers, and the N synchronization signal blocks are in the first frequency band in frequency domain and are in a first time period in time domain; and
sending the L synchronization signal blocks.

23. The method according to claim 22, wherein the method further comprises:
sending first configuration information in the third frequency band, wherein the first configuration information is used to configure the first frequency band, the first configuration information comprises first indication information, and the first indication information indicates the L synchronization signal blocks.

24. The method according to claim 22, wherein the method further comprises:
sending second indication information in a second time period in the first frequency band, wherein the second indication information indicates the L synchronization signal blocks, and the second time period is before the first time period.

25. The method according to any one of claims 19 to 24, wherein the first frequency band and the third frequency band are respectively located on two carriers; or the first frequency band and the third frequency band are respectively two bandwidth parts BWPs on one carrier.

26. The method according to any one of claims 19 to 25, wherein the third frequency band is a carrier of a primary cell PCell of a terminal device, and the first frequency band is a carrier of a secondary cell SCell of the terminal device.

27. A communication apparatus, comprising:
a processing unit, configured to determine to send a first sensing signal and a first communication signal in a first frequency band; and
a transceiver unit, configured to send the first sensing signal and the first communication signal in the first frequency band, wherein
the transceiver unit is further configured to send a second sensing signal in a second frequency band; and
the transceiver unit is further configured to send a third communication signal in a third frequency band, wherein
the first frequency band comprises only a downlink resource, the second frequency band comprises only a downlink resource, and the third frequency band comprises an uplink resource and a downlink resource.

28. A communication apparatus, comprising:
a processing unit, configured to determine to send a first sensing signal and a first communication signal in a first frequency band; and
a transceiver unit, configured to send the first sensing signal and the first communication signal in the first frequency band, wherein
the transceiver unit is further configured to send a second sensing signal in a second frequency band, wherein
the first frequency band comprises an uplink resource and a downlink resource, and the second frequency band comprises only a downlink resource.

29. A communication apparatus, comprising:
a processing unit, configured to determine to send a first sensing signal and a first communication signal in a first frequency band; and
a transceiver unit, configured to send the first sensing signal and the first communication signal in the first frequency band, wherein
the transceiver unit is further configured to send a third communication signal in a third frequency band, wherein
the first frequency band comprises only a downlink resource, and the third frequency band comprises an uplink resource and a downlink resource.

30. A communication apparatus, comprising a processor and a memory, wherein the memory is configured to store a computer program or instructions, and the processor is configured to execute the computer program or the instructions in the memory, to perform the method according to any one of claims 1 to 26.

31. A computer-readable storage medium, wherein the computer-readable storage medium stores instructions, and when the instructions are run on a computer, the computer is enabled to perform the method according to any one of claims 1 to 26.

32. A computer program product, comprising instructions, wherein when the instructions are run on a computer, the computer is enabled to perform the method according to any one of claims 1 to 26.
